# EUROPEAN PATENT APPLICATION

(11) **EP 2 829 371 A1**
(43) Date of publication of application: **28.01.2015**
(21) Application number: 12872007.5
(22) Date of filing: 22.03.2012
(51) Int. Cl.: B25J 19/06

(54) **WORK ROBOT AND ROBOT SYSTEM**

(71) Applicant: Kabushiki Kaisha Yaskawa Denki, Kitakyushu-shi, Fukuoka 806-0004 (JP)
(72) Inventor: ICHIBANGASE, Atsushi, Kitakyushu-shi Fukuoka 806-0004 (JP); SAJIKAWA, Yuji, Kitakyushu-shi Fukuoka 806-0004 (JP); SHIRAKI, Tomoyuki, Kitakyushu-shi Fukuoka 806-0004 (JP); MATSUO, Tomohiro, Kitakyushu-shi Fukuoka 806-0004 (JP); ISHIKAWA, Shinichi, Kitakyushu-shi Fukuoka 806-0004 (JP); KAWANO, Tomoki, Kitakyushu-shi Fukuoka 806-0004 (JP)
(74) Representative: Grünecker, Kinkeldey, Stockmair & Schwanhäusser
(86) International application number: PCT/JP2012/057367
(87) International publication number: WO 2013/140579

(57) **Abstract**

Provided are a working robot and a robot system serving as a type coexisting with humans and improving reliability in safety. The working robot includes an arm, a driving mechanism, and a controller. The arm includes a plurality of link members that are coupled rotatably around shafts. The driving mechanism includes a driving source, and a plurality of power transmission paths capable of transmitting motive power from the driving source to the link members with mutually different numbers of revolutions or torques. The controller switches the power transmission paths, based on a sensing result for a moving object including a human body in a certain area.

## Description

### Field

The present invention relates to a working robot and a robot system.

### Background

In related art, known are working robots including a plurality of link members that are coupled rotatably around shafts, and working together with humans, as robot of a type coexisting with humans. Working robots including such arms are required to avoid interference of the arms with another object including humans, and avoid damaging the other party even if the robots contact the other party.

To address this, robots have been developed that include a controller that controls operation of the arm to coexist with humans, without damaging humans even if the arm contacts the humans. In the robot, software of the controller controls operation of the arm, to cause the arm to perform an optimum contact operation with humans (for example, see Patent Literature 1).

### Citation List

### Patent Literature

Patent Literature 1: Japanese Patent Application Laid-open No. 2008-302496

### Summary

### Technical Problem

However, as working robots of a type coexisting with humans, it is desirable to achieve operation control with more improved reliability than that of operation control depending on only software as disclosed in above Patent Literature 1.

An aspect of an embodiment has been made in consideration of the above. An object of the aspect is to provide a working robot and a robot system that coexist with humans and are capable of further enhancing reliability in safety.

### Solution to Problem

According to an aspect of an embodiment, a working robot includes: an arm including a plurality of link members rotatably coupled around shafts;a driving mechanism including a driving source, and a plurality of power transmission paths capable of transmitting motive power from the driving source to the link members with mutually different numbers of revolutions or torques; and a controller that switches the power transmission paths, based on a sensing result for a moving object including a human body in a certain area.

### Advantageous Effects of Invention

According to an aspect of an embodiment, it is possible to provide a working robot of a type coexisting with humans with higher reliability in safety.

### Brief Description of Drawings

FIG. 1 is an explanatory drawing illustrating a working area in which a robot system according to an embodiment is installed.
FIG. 2 is an explanatory drawing illustrating a turning area of an arm part of a working robot in the robot system according to the embodiment.
FIG. 3A is a schematic explanatory drawing of a joint part included in the working robot.
FIG. 3B is a schematic explanatory drawing illustrating power transmission paths to a link member.
FIG. 4 is an explanatory drawing of a driving mechanism provided in the joint part.
FIG. 5 is an explanatory drawing illustrating a clutch mechanism of the driving mechanism.
FIG. 6 is a view on arrow A in FIG. 5.
FIG. 7 is a schematic explanatory drawing illustrating a driving mechanism according to a second embodiment.
FIG. 8 is a schematic explanatory drawing illustrating a modification of the driving mechanism.
FIG. 9 is a schematic explanatory drawing illustrating a driving mechanism according to a third embodiment.

### Description of Embodiments

### (First Embodiment)

Embodiments of a working robot and a robot system disclosed by the present application will now be explained in detail with reference to the attached drawings. The following embodiments do not limit the present invention.

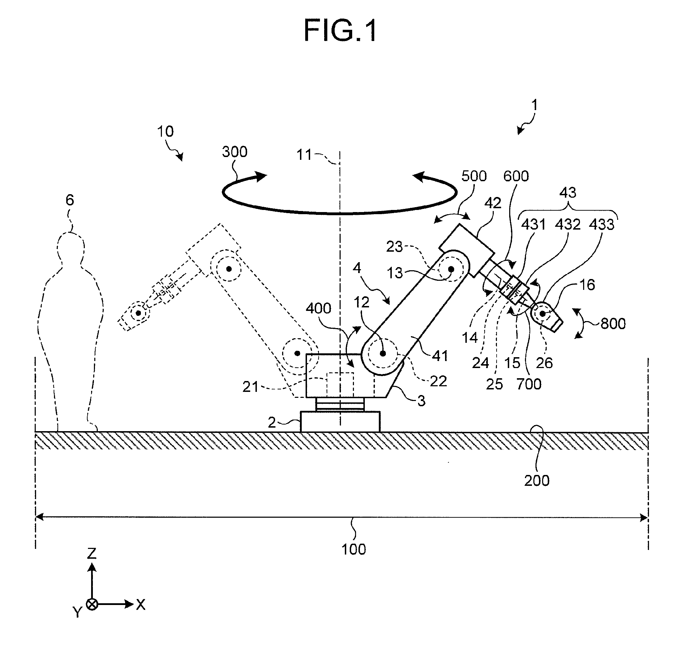

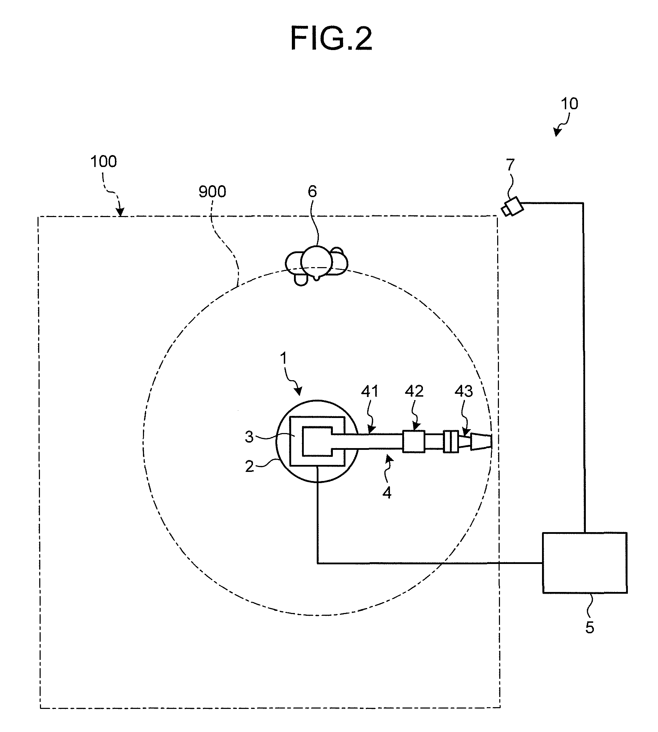

FIG. 1 is an explanatory drawing illustrating a working area 100 in which a robot system 10 according to the present embodiment is installed, and FIG. 2 is an explanatory drawing illustrating a turning area of an arm part 4 of a working robot 1 included in the robot system 10.

The robot system 10 according to the present embodiment includes a working robot 1 of a type coexisting with humans. As illustrated in FIG. 1, the robot system 10 is installed by placing the working robot 1 in a predetermined position on a floor 200 in a predetermined working area 100 which a worker 6 serving as a moving object can go in and out. The position in which the working robot 1 is placed can be properly set according to the work. In this example, the working robot 1 is placed in an almost central position of the working area 100. In addition, the working area 100 is divided as, for example, a working booth (not illustrated) in an automobile manufacturing line.

As illustrated in FIG. 2, the robot system 10 includes a controller 5 that controls operation of the working robot 1. The controller 5 stores contents of control commands for the working robot 1 in advance, and the working robot 1 is controlled based on the stored contents. The controller 5 will be explained in detail later.

As illustrated in FIG. 1, the working robot 1 includes a base 2 that is placed on the floor 200, and an arm part 4 that is turnably provided on the base 2.

The arm part 4 includes an arm formed of an arm base 3, a first arm member 41, and a second arm member 42, and a wrist 43 formed of a first wrist member 431, a second wrist member 432, and a third wrist member 433, which are successively coupled to the base 2 via shafts. An end effector (not illustrated) suitable for the work assigned to the working robot 1 is attached to a distal end of the third wrist member 433. FIG. 2 illustrates a maximum turning locus 900 in a state where the arm part 4 of the working robot 1 having the above structure is extended to the maximum.

As described above, the working robot 1 according to the present embodiment is formed of an articulated robot including, as movable parts, the arm base 3, the first arm member 41, and the second arm member 42 of the arm, and the first wrist member 431, the second wrist member 432, and the third wrist member 433 of the wrist 43.

As explained below, the movable parts of the working robot 1 are configured to be rotatable around shafts via a first joint part 21 to a sixth joint part 26.

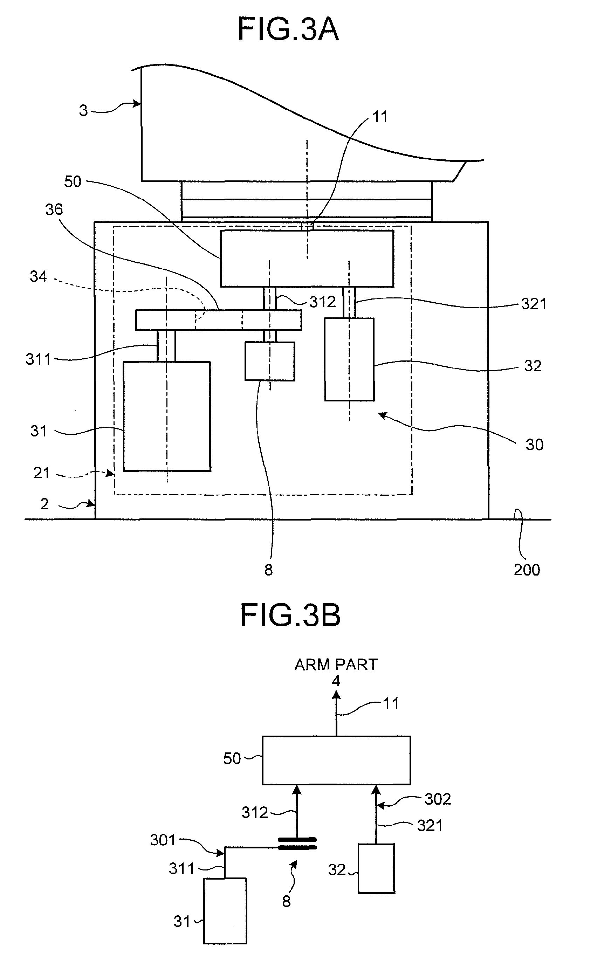

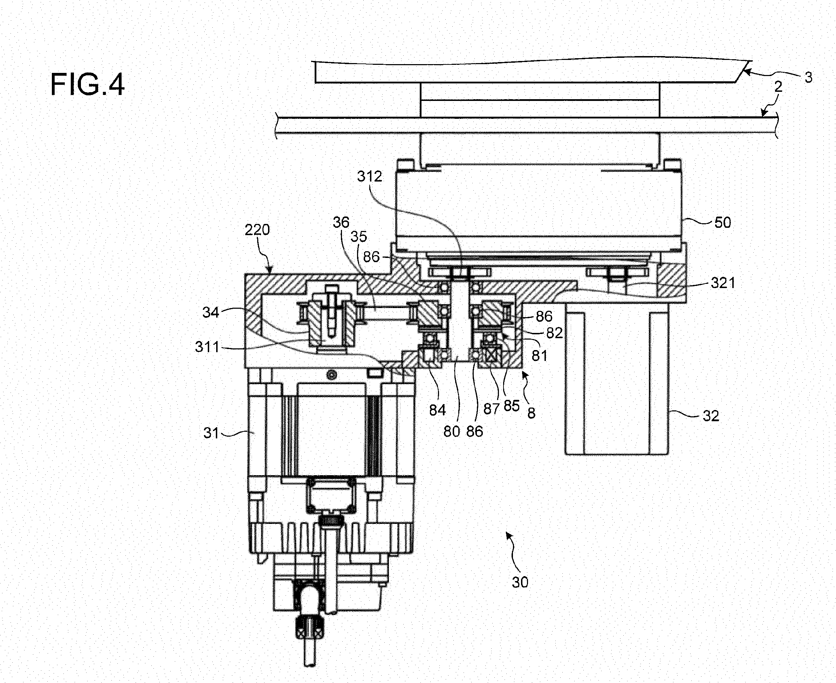

FIG. 3A is a schematic explanatory drawing of a joint part included in the working robot 1, and illustrates the first joint part 21. FIG. 3B is a schematic explanatory drawing illustrating power transmission paths to the arm base 3 serving as one of the link members. FIG. 4 is an explanatory drawing of a first transmission mechanism 30 serving as a driving mechanism provided in the first joint part 21. FIG. 3A and FIG. 4 illustrate the working robot 1 as viewed in the same direction (Y direction) as that of FIG. 1.

The structures of the first joint part 21 to the sixth joint parts 26 are basically the same. Thus, the structure of the first joint part 21 will be explained with reference to FIG. 3A, FIG. 3B, and FIG. 4, and specific explanation of the structures of the other joint parts (the second joint part 22 to the sixth joint part 26) will be omitted.

The first joint part 21 forms one of the movable parts, and rotatably connects the arm base 3 serving as the trunk part of the working robot 1 to the almost cylindrical base 2 placed in a fixed state on the floor 200. Specifically, as illustrated in FIG. 1, the first joint part 21 is provided in almost the center of the base 2, and includes a first shaft 11 extending in a vertical direction (Z direction).

As illustrated in FIG. 3A to FIG. 4, the first shaft 11 is connected and coupled with a first transmission mechanism that includes a first motor unit and a first reduction gear 50. Thereby, the arm base 3 is rotated around the first shaft 11 in a horizontal direction by the first transmission mechanism 30, with respect to the base 2, as illustrated in FIG. 1 (see an arrow 300).

As illustrated in FIG. 3A, FIG. 3B, and FIG. 4, the first joint part 21 includes, as a driving mechanism, the first transmission mechanism 30 that includes a first motor unit provided with a first motor 31 and a second motor 32 serving as driving sources, and the first reduction gear 50.

As illustrated in FIG. 3B, the first transmission mechanism 30 includes a first power transmission path 301 and a second power transmission path 302 that are capable of selectively transmitting the motive power from the respective driving sources to the arm base 3. The first power transmission path 301 and the second power transmission path 302 are capable of transmitting the motive power from the respective driving sources with numbers of revolutions or torques that are different from each other.

In this example, the first motor 31 serves as the driving source that indicates a relatively large number of revolutions or a relatively high torque and has a relatively large maximum output value, while the second motor 32 serves as the driving source that indicates a relatively small number of revolutions or a relatively low torque and has a relatively small maximum output value.

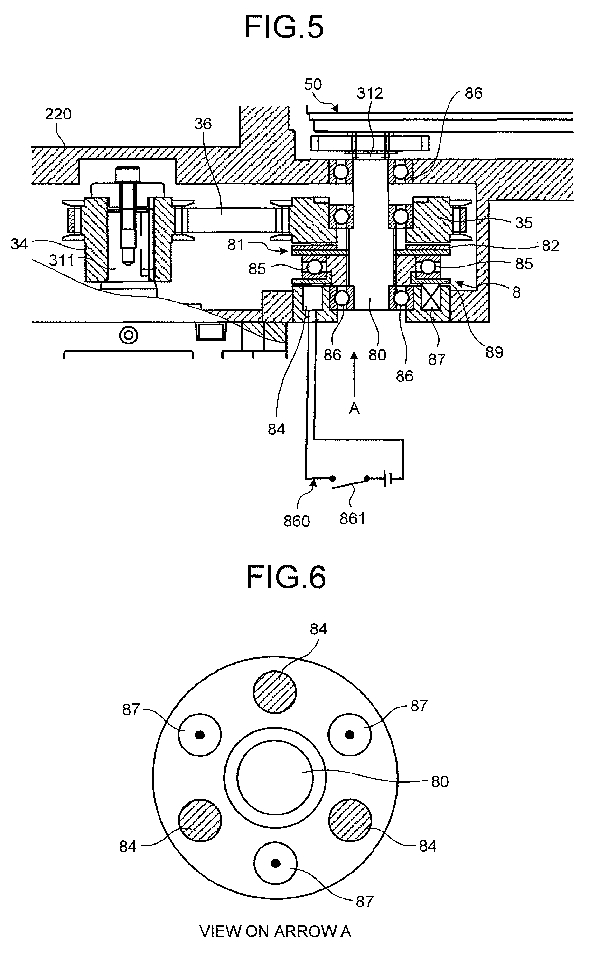

The first power transmission path 301 serves as a path connecting the first motor 31 with the first reduction gear 50. The first power transmission path 301 as described above has a structure in which a belt 36 is wound between an output pulley 34 provided on an output shaft 311 of the first motor 31 and an input pulley 35 provided on a clutch shaft 80 (see FIG. 5) of a clutch mechanism 8 described later. The clutch shaft 8 of the clutch mechanism 8 is connected and coupled with the first reduction gear 50.

Thereby, in the first power transmission path 301, the motive power from the first motor 31 is transmitted from the first motor 31 to the output shaft 311, the output pulley 34, the belt 36, the input pulley 35, the first input shaft 312, and the first reduction gear 50 in this order.

On the other hand, the second power transmission path 302 serves as a path connecting the second motor 32 with the first reduction gear 50. In the second power transmission path 302, an output shaft 321 of the second motor 32 is directly connected and coupled with the first reduction gear 50. Specifically, the second power transmission path 302 has the structure in which the output shaft 321 of the second motor 32 is directly connected with the input shaft of the first reduction gear 50.

Thereby, in the second power transmission path 302, the motive power from the second motor 32 is directly transmitted from the second motor 32 to the output shaft 321 and the first reduction gear 50 in this order.

In addition, as illustrated, the arm base 3 is fixed to the first shaft 11 serving as the output shaft of the first reduction gear 50. Specifically, the arm base 3 located closest to the base 2 among the movable parts is rotated by the driving force of the first motor 31 or the second motor 32, via one of the first power transmission path 301 and the second power transmission path 302.

The following is explanation of the clutch mechanism 8 that connects and disconnects the first motor 31 to and from the arm base 3 serving as the link member, with reference to FIG. 5 and FIG. 6. FIG. 5 is an explanatory drawing illustrating the clutch mechanism 8 of the first transmission mechanism 30, and FIG. 6 is a view on arrow A in FIG. 5.

As illustrated, in the clutch mechanism 8, a clutch shaft 80 that is connected and coupled with the first input shaft 312 of the first reduction gear 50 is supported in a drive casing 220 via a radial bearing 86.

In addition, the input pulley 35 is attached to a central part of the clutch shaft 80 via a radial bearing 86. A clutch disk 81 is attached to one side surface part of the input pulley 35 by spline fitting.

The clutch disk 81 is provided with a friction plate 82 that is capable of abutting against one side surface part of the input pulley 35. The friction plate 82 is disposed to be capable of contacting and being separated from the side surface part of the input pulley 35 via a thrust bearing 85. The side surface part of the input pulley 35 is a surface facing in a direction opposite to the direction of the first reduction gear 50, that is, a surface facing upward in FIG. 5.

One side surface part of the clutch disk 81 is provided with spring members 87 that urge the clutch disk 81, and electromagnets 84 that adsorb the clutch disk 81 against the urging force of the spring member 87. The side surface part of the clutch disk 81 is provided with a metal plate 89 as one unitary piece. The spring members 87 press the metal plate 89, and the electromagnets 84 attract the metal plate 89 by magnetic force. The electromagnets 84 are electrically connected with a switch circuit 860, and is capable of adsorb the clutch disk 81 against the urging force of the spring members 87, by turning on and off a switch 861.

The clutch disk 81 is pressed against the input pulley 35, with the clutch mechanism 8 having the above structure in an off state in which the electromagnets 84 are not energized. Thereby, rotation of the input pulley 35 rotates the clutch disk 81 that is fitted by spline-fitting with the clutch shaft 80 via the friction plate 82, and the turning force is transmitted to the clutch shaft 80.

In the meantime, in the present embodiment, three electromagnets 84 and three spring members 87 are alternately arranged on an imaginary circumference that is concentric with the clutch shaft 80, as illustrated in FIG. 6. Thus, the clutch disk 80 can be attracted and pressed with good balance. The arrangement of the electromagnets 84 and the spring members 87 is not always limited to that of the present embodiment.

The following is brief explanation of the movable parts that rotate around shafts via the respective joint parts including the above first joint part 21, based on FIG. 1.

The side part of the arm base 3 described above is provided with the second joint part 22. The first arm member 41 that is longest in the movable parts is rotatably coupled via the second joint part 22.

Because the first arm member 41 is coupled in a position that is eccentric relative to the first shaft 11 that couples the arm base 3, the first arm member 41, and the second arm member 42 and the wrist 43 that are successively coupled to the first arm 41 via shafts are turned around the first shaft 11.

As illustrated in FIG. 1, a second shaft 12 of the second joint part 22 extends in a direction perpendicular to the first shaft 11, that is, in a horizontal direction (Y direction) extending from front to rear on the drawing. Thereby, the first arm member 41 is rotated around the second shaft 12, that is, swung in a vertical direction (see an arrow 400), by the second transmission mechanism (not illustrated).

A distal end of the first arm member 41 is provided with the third joint part 23, and the second arm member 42 having an almost L shape is coupled via the third joint part 23.

The third joint part 23 includes a third shaft 13 extending in a direction parallel with the second shaft 12, that is, in the same direction as the second shaft 12 perpendicular to the first shaft 11. The third shaft 13 is connected and coupled with a third transmission mechanism (see FIG. 3A) including a third motor unit and a third reduction gear. Thereby, the second arm member 42 is rotated around the third shaft 13, that is, swung in a vertical direction (see an arrow 500), by the third transmission mechanism.

A distal end of the second arm member 42 is provided with the fourth joint part 24, and the first wrist member 431 is coupled via the fourth joint part 24.

The wrist 43 is formed of the cylindrical first wrist member 431 coupled to the fourth joint part 24, the second wrist member 432 coupled to the first wrist member 431, and the third wrist member 433 provided with an end effector.

The fourth joint part 24 that is connected and coupled with the first wrist member 431 includes a fourth shaft 14 extending in a direction perpendicular to the third shaft 13, that is, in a horizontal direction (X direction) extending from right to left on the drawing. The fourth shaft 14 is connected and coupled with a fourth transmission mechanism (see FIG. 3A) including a fourth motor unit and a fourth reduction gear. Thereby, the first wrist member 431 that is coaxially connected and coupled with the fourth shaft 14 is rotated around the fourth shaft 14, that is, rotates on its own axis around the fourth shaft 14 (see an arrow 600), by the fourth transmission mechanism.

A distal end of the first wrist member 431 is provided with the fifth joint part 25, and the second wrist member 432 is coaxially coupled via the fifth joint part 25.

The fifth joint part 25 includes a fifth shaft 15 extending in a coaxial direction with the fourth shaft 14, that is, in the horizontal direction (X direction) extending from right to left on the drawing. The fifth shaft 15 is connected and coupled with a fifth transmission mechanism (see FIG. 3A) including a fifth motor unit and a fifth reduction gear. Thereby, the second wrist member 432 that is coaxially connected and coupled with the fifth shaft 15 is rotated around the fifth shaft 15, that is, rotates on its own axis around the fifth shaft 15 (see an arrow 700), by the fifth transmission mechanism.

A distal end of the second wrist member 432 is provided with the sixth joint part 26, and the third wrist member 433 is coupled via the sixth joint part 26.

The sixth joint part 26 includes a sixth shaft 16 extending in a direction perpendicular to the fifth shaft 15, that is, in the horizontal direction (Y direction) extending from front to rear on the drawing. The sixth shaft 16 is connected and coupled with a sixth transmission mechanism (see FIG. 3A) including a sixth motor unit and a sixth reduction gear. Thereby, the third wrist member 433 is rotated around the sixth shaft 16, that is, swung in a vertical direction (see an arrow 800), by the sixth transmission mechanism.

As described above, the working robot 1 according to the present embodiment includes the arm part 4 that is rotatably provided with respect to the base 2 provided on the floor 200 serving as the predetermined placing surface.

The arm part 4 includes the arm base 3 that is provided rotatably around the first shaft 11, the first arm member 41, the second arm member 42, and the wrist 43 that is rotatably provided with respect to the second arm member 42. The first arm member 41 is provided rotatably around the second shaft 12 with respect to the arm base 3. The second arm member 42 is provided rotatably around the third shaft 13 with respect to the first arm member 41.

The wrist 43 includes the first wrist member 431, the second wrist member 432, and the third wrist member 433. The first wrist member 431 is provided rotatably around the fourth shaft 14 with respect to the second arm member 42. The second wrist member 432 is provided rotatably around the fifth shaft 15 with respect to the first wrist member 431. The third wrist member 433 is provided rotatably around the sixth shaft 16 with respect to the second wrist member 432, and has a distal end provided with a predetermined end effector.

The arm base 3, the first arm member 41, the second arm member 42, the first wrist member 431, the second wrist member 432, and the third wrist member 433 are a plurality of link members that are coupled rotatably around shafts, and form the movable parts of the working robot 1. The link members are rotated around the respective shafts (the first shaft 11 to the sixth shaft 16) by the motors provided in the respective transmission mechanisms.

In the present embodiment, the arm part 4 includes the first arm member 41 coupled with the arm base 3, the second arm member 42 coupled with the first arm member 41, and the wrist 43 coupled with the second arm member 42, as well as the arm base 3 coupled with the base 2. Specifically, the concept of the link members also includes the first wrist member 431, the second wrist member 432, and the third wrist member 433 that form the wrist 43 serving as a part of the arm part 4.

The controller 5 included in the robot system 10 is connected with the working robot 1, as illustrated in FIG. 2. The controller 5 includes a central processing unit (CPU), a read only memory (ROM), a random access memory (RAM), and a storage unit such as a hard disk, which are not illustrated. In the controller 5, the CPU reads a program stored in the storage unit, to drive the arm base 3, the first arm member 41, the second arm member 42, the first wrist member 431, the second wrist member 432, and the third wrist member 433 serving as the link members, in accordance with the program.

The controller 5 in the present embodiment is capable of switching the path through which the motive power is transmitted among a plurality of paths, based on a result of sensing a moving object, including the worker 6, in the working area 100.

The working robot 1 according to the present embodiment enables switching the path that transmits the motive power to the arm member 3 in the above first joint part 21 to one of the first power transmission path 301 and the second power transmission path 302.

Specifically, as described above, the first power transmission path 301 and the second power transmission path 302 are provided to be selectable in the first transmission mechanism 30. The first power transmission path 301 transmits the motive power from the first motor 31 that indicates a relatively large number of revolutions or relatively high torque and has a relatively large maximum output value, to the arm base 3 via the clutch mechanism 8. On the other hand, the second power transmission path 302 transmits the motive power from the second motor 32 that indicates a relatively small number of revolutions or relatively low torque and has a relatively small maximum output value, to the arm base 3.

The controller 5 switches the path to one of the power transmission paths, based on a result of sensing the worker 6. More specifically, as illustrated in FIG. 2, the controller 5 is electrically connected to a moving-object detector 7 that is formed of a proximity sensor or the like that senses movement of the worker 6 in the working area 100.

The moving-object detector 7 is disposed in the vicinity of the working area 100, and independent of the working robot 1. It is possible to use a camera capable of monitoring the whole inside of the working area 100, as the moving-object detector 7.

The controller 5 receives a sensing result obtained by the moving-object detector 7, and switches the path to one of the first power transmission path 301 and the second power transmission path 302, based on the received sensing result. Specifically, the controller 5 controls the operation of turning on and off the clutch mechanism 8, and executes driving control of the first motor 31 and the second motor 32.

When the sensing result indicates that the worker 6 is not present, the controller 5 turns on the first motor 31, turns off the second motor 32, and changes the clutch mechanism 8 to an "ON" state, that is, turns off the electromagnets 84. As a result, the clutch disk 81 is urged toward the input pulley 35 by the spring members 87, and the path that transmits the motive power to the arm base 3 is switched to the first power transmission path 301. Thereby, the motive power is transmitted to the arm base 3 with the relatively large number of revolutions or the relatively high torque of the first motor 31, and the arm part 4 is driven.

On the other hand, when the sensing result indicates that the worker 6 is present, the controller 5 turns off the first motor 31, turns on the second motor 32, and changes the clutch mechanism 8 to an "OFF" state, that is, turns on the electromagnets 84. As a result, the clutch disk 81 is separated from the input pulley 35 against the spring members 87, and the path that transmits the motive power to the arm base 3 is switched to the second power transmission path 302. Thereby, the motive power is transmitted to the arm base 3 with the relatively small number of revolutions or the relatively low torque of the second motor 32, and the arm part 4 is driven.

As described above, for example, when the worker 6 is not present in the working area 100, the controller 5 switches the path to the first power transmission path 301, because there is no fear that the arm part 4 or the like may contact the worker 6. Specifically, the controller 5 switches the path to the first power transmission path 301 capable of transmitting the motive power from the first motor 31 with the relatively large maximum output value to the arm base 3. In this case, it is possible to cause the working robot 1 to perform hard work that incurs relatively large load, and turn the arm part 4 at high speed.

On the other hand, when the worker 6 is present in the working area 100, the controller 5 switches the path to the second power transmission path 302, to prevent large damage even if the arm part 4 contacts the worker 6. Specifically, the controller 5 switches the path to the second power transmission path 302 capable of transmitting the motive power from the second motor 32 with the relatively small maximum output value to the arm base 3. In this case, it is possible to cause the working robot 1 to perform soft work that incurs relatively small load, and turn the arm part 4 at low speed.

### (Second Embodiment)

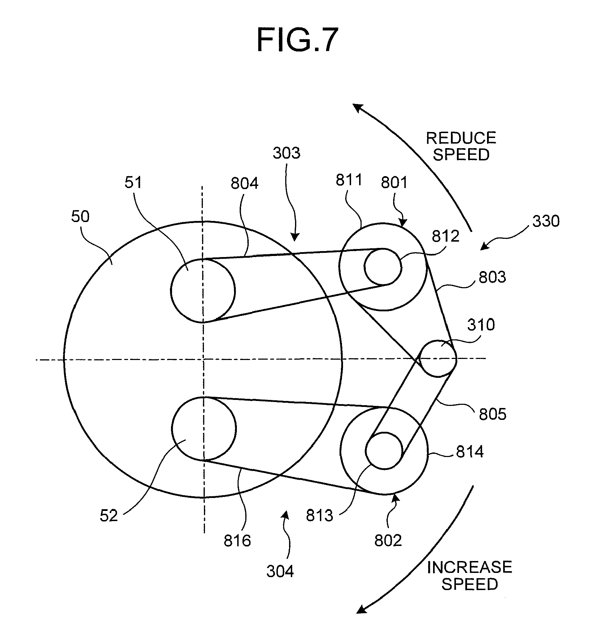

FIG. 7 is a schematic explanatory drawing illustrating a driving mechanism according to a second embodiment. The working robot 1 and the robot system 10 according to the second embodiment will be explained hereinafter, with reference to FIG. 7 illustrating a bottom view of the working robot 1. In the present embodiment, the same constituent elements as those of the working robot 1 according to the above first embodiment are denoted by the same respective reference numerals, and specific explanation of the constituent elements will be omitted.

Although the working robot 1 according to the above embodiment uses the first motor 31 and the second motor 32 with different relative maximum output values, as the driving source, the working robot 1 according to the present embodiment uses a single motor 310 as the driving source, as illustrated in FIG. 7.

Specifically, as illustrated, a gear shift mechanism 330 is provided between the single motor 310 and the first reduction gear 50. The gear shift mechanism 330 includes a first clutch-equipped pulley 801 serving as a transmission member for high-speed operation, and a second clutch-equipped pulley 802 serving as a transmission member for low-speed operation.

The first clutch-equipped pulley 801 includes an input large pulley 811 having a relatively large diameter and an output small pulley 812 having a relatively small diameter, while the second clutch-equipped pulley 802 includes an input small pulley 813 having a relatively small diameter and an output large pulley 814 having a relatively large diameter.

The clutch (not illustrated) of the first clutch-equipped pulley 801 is not turned on simultaneously with the clutch (not illustrated) of the second clutch-equipped pulley 802. Specifically, one of the clutches is selectively turned on, and the motive power from the motor 310 is transmitted to the arm base 3 via a third power transmission path 303 or a fourth power transmission path 304.

Specifically, the gear shift mechanism 330 includes the third power transmission path 303 for increasing the speed, and the fourth power transmission path 304 for reducing the speed. The third power transmission path 303 transmits the motive power from the motor 301 to the arm base 3 using the first clutch-equipped pulley 801 serving as the member for high-speed operation, and the fourth power transmission path 304 transmits the motive power from the motor 310 to the arm base 3 using the second clutch-equipped pulley 802 serving as the member for low-speed operation.

In the third power transmission path 303, the motor 310 is connected and coupled with the large-diameter input large pulley 811 with a first belt 803, and the small-diameter output small pulley 812 is connected and coupled with a reduction-gear first input pulley 51 provided in the first reduction gear 50 with a second belt 804. Specifically, with the third power transmission path 303, the motive power of the motor 310 is transmitted from the motor 310 to the first belt 803, the first clutch-equipped pulley 801 (the transmission member for low-speed operation), the second belt 804, the reduction-gear first input pulley 51, and the first reduction gear 50 in this order.

On the other hand, in the fourth power transmission path 304, the motor 310 is connected and coupled with the small-diameter input small pulley 813 with a third belt 805, and the large-diameter output large pulley 814 is connected and coupled with a reduction-gear second input pulley 52 provided in the first reduction gear 50 with a fourth belt 806. Specifically, with the fourth power transmission path 304, the motive power of the motor 310 is transmitted from the motor 310 to the third belt 805, the second clutch-equipped pulley 802 (the transmission member for high-speed operation), the fourth belt 806, the reduction-gear second input pulley 52, and the first reduction gear 50 in this order.

In the above structure, when the sensing result obtained by the moving-object detector 7 indicates that the worker 6 is not present, the controller 5 switches the path to the third power transmission path 303, to drive the arm. Specifically, the controller switches the path to the third power transmission path 303 that transmits the motive power from the motor 310 to the arm base 3 serving as the link member, using the first clutch-equipped pulley 801 of the gear shift mechanism 330, to drive the arm. On the other hand, when the sensing result obtained by the moving-object detector 7 indicates that the worker 6 is present, the controller 5 switches the path to the fourth power transmission path 304 that transmits the motive power from the motor 310 to the arm base 3, using the second clutch-equipped pulley 802 of the gear shift mechanism 330, to drive the arm.

As described above, in the working robot 1 and the robot system 10 according to the present embodiment, the arm part 4 of the working robot 1 can be turned at high speed with the single motor 310, when the worker 6 is not present in the working area 100. On the other hand, when the worker 6 is present in the working area 100, the arm part 4 of the working robot 1 is turned at low speed, to prevent large damage even if the arm part 4 or the like contacts the worker 6.

### (Modification)

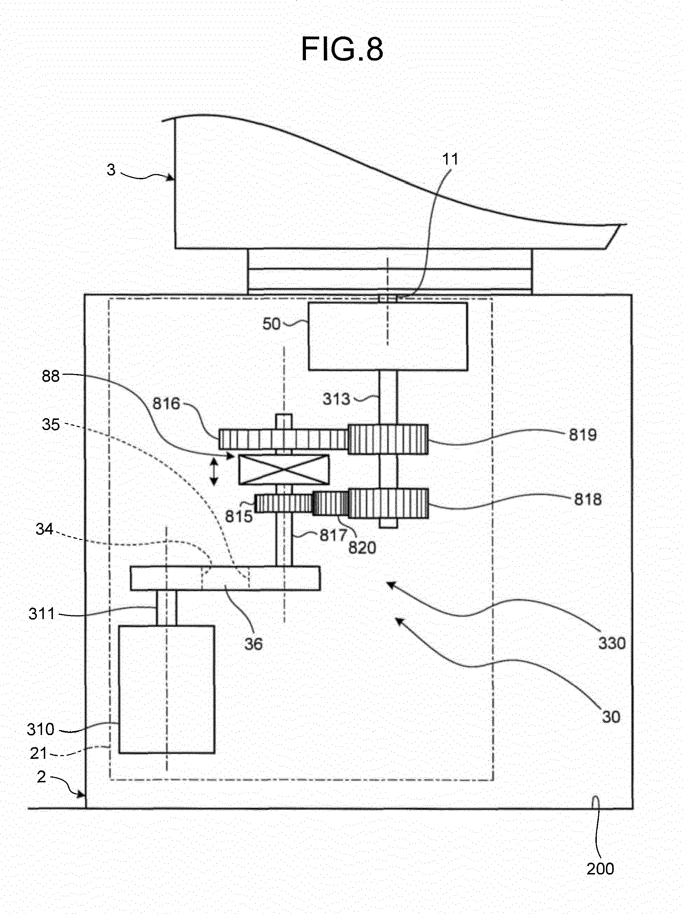

FIG. 8 illustrates a modification of the structure in which the gear shift mechanism 330 is provided between the single motor 310 and the arm base 3. FIG. 8 also illustrates the working robot 1 as viewed in the same direction (Y direction) as that of FIG. 1, like FIG. 3A and FIG. 4. Also in the modification, the same constituent elements as those of the working robot 1 according to each of the above first and second embodiments are denoted by the same respective reference numerals, and specific explanation of the constituent elements will be omitted.

In the working robot 1 according to the above-described second embodiment, the first clutch-equipped pulley 801 is used as the member for high-speed operation, and the second clutch-equipped pulley 802 is used as the member for low-speed operation. In the modification, gears are used instead of the pulleys.

Specifically, as illustrated, in the gear shift mechanism 330, a high-speed gear 815 serving as the member for high-speed operation and a low-speed gear 816 serving as the member for low-speed operation are coaxially provided on a relay shaft 817 via a gear switching mechanism 88. The relay shaft 817 is provided with the input pulley 35, and the input pulley 35 is connected and coupled with the output pulley 34 provided on the output shaft 311 of the motor 310 with the belt 36.

A reduction-gear input shaft 313 that is provided on the first reduction gear 50 is provided with a first relay gear 818 and a second relay gear 819 that correspond to and are engaged with the high-speed gear 815 and the low-speed gear 816, respectively. Thereby, in the gear shift mechanism 330 in the modification, the motive power from the motor 310 is input to the first reduction gear 50 via one of the high-speed gear 815 and the low-speed gear 816, by the gear switching mechanism 88. As illustrated, an idler gear 820 is inserted between the high-speed gear 815 and the first relay gear 818.

Thus, with the third power transmission path 303 of the working robot 1 according to the modification, the motive power of the motor 310 is transmitted from the motor 310 to the output shaft 311, the output pulley 34, the belt 36, the input pulley 35, the high-speed gear 815, the idler gear 820, the first relay gear 818, the reduction-gear input shaft 313, and the first reduction gear 50 in this order.

On the other hand, with the fourth power transmission path 304, the motive power of the motor 310 is transmitted from the motor 310 to the output shaft 311, the output pulley 34, the belt 36, the input pulley 35, the low-speed gear 816, the second relay gear 819, the reduction-gear input shaft 313, and the first reduction gear 50 in this order.

As described above, in the working robot 1 according to the present modification, when the sensing result obtained by the moving-object detector 7 indicates that the worker 6 is not present, the controller 5 switches the path to the power transmission path (corresponding to the third power transmission path 303 in FIG. 7) that transmits the motive power from the motor 310 to the arm base 3 using the high-speed gear 815 of the gear shift mechanism 330, to drive the arm. On the other hand, when the sensing result obtained by the moving-object detector 7 indicates that the worker 6 is present, the controller 5 switches the path to the power transmission path (corresponding to the fourth power transmission path 304 in FIG. 7) that transmits the motive power from the motor 310 to the arm base 3 using the low-speed gear 816 of the gear shift mechanism 330, to drive the arm.

In the present embodiment, because one idler gear 820 is used in the third power transmission path 303, the rotational direction of the arm base 3 is reverse to the fourth power transmission path 304. Thus, when the controller 5 switches the power transmission path, the controller 5 is required to also switch the rotational direction of the motor 310 between the forward and the reverse directions.

### (Third Embodiment)

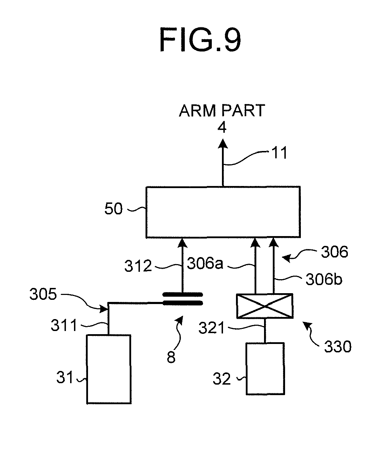

FIG. 9 is a schematic explanatory drawing illustrating a driving mechanism according to a third embodiment. As illustrated, it is possible to combine the structures of the driving mechanism according to the first embodiment and the driving mechanism according to the second embodiment as described above.

Specifically, the driving mechanism includes the first motor 31 having a relatively large maximum output value and the second motor 32 having a relatively small maximum output value. In addition, the clutch mechanism 8 illustrated in FIG. 3A and FIG. 3B is inserted between the first motor 31 and the arm base 3, and the gear shift mechanism 330 illustrated in FIG. 7 or FIG. 8 is inserted between the second motor 32 and the arm base 3. Also in the present embodiment, the same constituent elements as those of the working robot 1 according to each of the above first and second embodiments are denoted by the same respective reference numerals, and specific explanation of the constituent elements will be omitted.

When the sensing result obtained by the moving-object detector 7 indicates that the worker 6 is not present, the controller 5 connects the clutch mechanism 8 to switch the path to a fifth power transmission path 305 that transmits the motive power from the first motor 31 to the arm base 3, to drive the arm part 4.

On the other hand, when the sensing result obtained by the moving-object detector 7 indicates that the worker 6 is present, the controller 5 disconnects the clutch mechanism 8 to switch the path to a sixth power transmission path 306 that transmits the motive power from the second motor 32 to the arm base 3. Then, the controller 5 selects one of the high-speed gear 815 and the low-speed gear 816 of the gear shift mechanism 330, according to the position of the worker 6, to drive the arm part 4.

In the working robot 1 according to the present embodiment, when the worker 6 is not present in the working area 100, the controller switches the path to the fifth power transmission path 305, to cause the working robot 1 to perform hard work that incurs relatively large load, and turn the arm part 4 at high speed, using the first motor 31 having the large maximum output value.

On the other hand, when the worker 6 is present in the working area 100, the controller 5 switches the path to the sixth power transmission path 306, to prevent large damage even if the arm part 4 or the like contacts the worker 6. Thereby, it is possible to cause the working robot 1 to perform soft work that incurs relatively small load, and turn the arm part 4 at low speed, using the second motor 32 having the small maximum output value.

In addition, the sixth power transmission path 306 according to the present embodiment is branched from the downstream part of the gear shift mechanism 330 into two systems, that is, a path 306a in which the member for high-speed operation is used, and a path 306b in which the member for low-speed operation is used. Thus, the turning speed of the arm part 4 can be varied according to the distance between the worker 6 and the working robot 1. For example, it is possible to perform control to set the turning speed of the arm part 4 to low speed, when the worker 6 comes close to the working robot 1 and reaches a position at a predetermined distance or less from the working robot 1.

The working robot 1 according to the embodiments or the modification explained above has the structure of including a plurality of power transmission paths that are capable of transmitting the motive power from the driving source to the arm part 4 with the respective numbers of revolutions or torques that are different from each other, to switch the power transmission path based on a result of sensing a moving object including the human body. Thus, the turning operation of the arm part 4 is mechanically controlled, instead of control depending on only software, and thereby the reliability is more improved as the working robot 1 and the robot system 10 of the type coexisting with humans.

In the meantime, in each of the above embodiments, the object to be controlled is the first transmission mechanism 30 of the first joint part 21. However, the object to be controlled is not limited to it, but may be each of the transmission mechanisms of the second joint part 22 to the sixth joint part 26 that rotate the respective link members around the shafts, or a combination of the necessary joint parts may also be controlled.

In addition, although the moving-object detector 7 is disposed independently of the working robot 1 in the above embodiments, the moving-object detector 7 may be provided as one unitary piece with the working robot 1.

Although the working robot 1 has a one-arm structure in the above embodiments, the working robot 1 may have a structure of including a double arm part.

The skilled person can easily reach further effects and other modifications. Thus, broader aspects of the present invention are not limited to the specific details or the representative embodiments disclosed and described above. Therefore, various changes are possible without departing from the spirit or scope of the general concept of the invention defined by the attached claims and equivalents thereof.

### Reference Signs List

- 1: Working robot
- 4: Arm part
- 5: Controller
- 6: Worker
- 7: Moving-object detector
- 8: Clutch mechanism
- 30: Second transmission mechanism
- 31: First motor
- 32: Second motor
- 100: Working area (certain area)
- 301: First power transmission path
- 302: Second power transmission path
- 303: Third power transmission path
- 304: Fourth power transmission path
- 330: Gear shift mechanism

## Claims

1. A working robot comprising:
an arm including a plurality of link members rotatably coupled around shafts;
a driving mechanism including a driving source, and a plurality of power transmission paths capable of transmitting motive power from the driving source to the link members with mutually different numbers of revolutions or torques; and
a controller that switches the power transmission paths, based on a sensing result for a moving object including a human body in a certain area.

2. The working robot according to claim 1, wherein
the controller:
switches to a power transmission path that transmits the motive power to the link members with a relatively large number of revolutions or a relatively high torque, to drive the arm, when the sensing result indicates that the moving object is not present; and
switches to a power transmission path that transmits the motive power to the link members with a relatively small number of revolutions or a relatively low torque, to drive the arm, when the sensing result indicates that the moving object is present.

3. The working robot according to claim 1 or 2, further comprising:
a first motor serving as a driving source with a relatively large maximum output value; and
a second motor serving as a driving source with a relatively small maximum output value, wherein
the controller:
switches to a first power transmission path that transmits motive power from the first motor to the link members, to drive the arm, when the sensing result indicates that the moving object is not present; and
switches to a second power transmission path that transmits motive power from the second motor to the link members, to drive the arm, when the sensing result indicates that the moving object is present.

4. The working robot according to claim 3, wherein
the driving mechanism includes a clutch mechanism that connects and disconnects the first motor to and from the link members, and
the controller connects a clutch of the clutch mechanism to switch to the first power transmission path when the sensing result indicates that the moving object is not present, and disconnects the clutch of the clutch mechanism to switch to the second power transmission path when the sensing result indicates that the moving object is present.

5. The working robot according to claim 1 or 2, wherein
the driving mechanism includes a gear shift mechanism provided between a single motor serving as the driving source and the link members, and
the controller:
switches to a third power transmission path that transmits motive power from the motor to the link members using a member for high-speed operation of the gear shift mechanism, to drive the arm, when the sensing result indicates that the moving object is not present; and
switches to a fourth power transmission path that transmits the motive power from the motor to the link members using a member for low-speed operation of the gear shift mechanism, to drive the arm, when the sensing result indicates that the moving object is present.

6. The working robot according to claim 1, further comprising:
a first motor serving as a driving source with a relatively large maximum output value; and
a second motor serving as a driving source with a relatively small maximum output value, wherein
the driving mechanism includes:
a clutch mechanism that connects and disconnects the first motor to and from the link members; and
a gear shift mechanism provided between the second motor and the link members, and
the controller:
connects a clutch of the clutch mechanism to switch to a fifth power transmission path that transmits motive power from the first motor to the link members, to drive the arm, when the sensing result indicates that the moving object is not present; and
disconnects the clutch of the clutch mechanism to switch to a sixth power transmission path that transmits motive power from the second motor to the link members, and selects one of a member for high-speed operation or a member for low-speed operation of the gear shift mechanism according to a position of the moving object, to drive the arm, when the sensing result indicates that the moving object is present.

7. The working robot according to any one of claims 1 to 6, wherein a reduction gear that decelerates an output from the driving source and transmits the output to the link members is attached to a joint shaft to which the link members are rotatably coupled.

8. The working robot according to any one of claims 1 to 7, further comprising:
a moving-object detector that senses the moving object including a human in the certain area, and outputs a sensing result to the controller.

9. A robot system comprising:
the working robot according to any one of claims 1 to 7 disposed in a certain area; and
a moving-object detector disposed independently of the working robot, the moving-object detector sensing a moving object including a human in the certain area, and outputting a sensing result to the controller.
